**Europäisches Patentamt**

**European Patent Office**

**Office européen des brevets**

(19)

(11) Publication number: **0 095 915**
**B1**

(12) **EUROPEAN PATENT SPECIFICATION**

(45) Date of publication of patent specification: **21.01.87**

(51) Int. Cl.⁴: **B 65 B 27/08, B 65 B 13/32**

(21) Application number: **83303084.4**

(22) Date of filing: **27.05.83**

(54) Banding method and apparatus.

(30) Priority: **28.05.82 GB 8215755**

(43) Date of publication of application:
**07.12.83 Bulletin 83/49**

(45) Publication of the grant of the patent:
**21.01.87 Bulletin 87/04**

(84) Designated Contracting States:
**CH DE FR GB IT LI SE**

(56) References cited:
**WO-A-81/03315**
**US-A-2 982 063**
**US-A-3 788 933**

(73) Proprietor: **DE LA RUE SYSTEMS LIMITED**
**De la Rue House 3/5 Burlington Gardens**
**London W1A 1DL (GB)**

(72) Inventor: **Cook, Richard**
**158 Clive Road**
**Fratton Portsmouth (GB)**

(74) Representative: **Abbott, Leonard Charles et al**
**GILL JENNINGS & EVERY 53-64 Chancery Lane**
**London WC2A 1HN (GB)**

Courier Press, Leamington Spa, England.

## Description

The present invention relates to a method and apparatus for wrapping an object with tape, and is particularly useful for wrapping stacks of banknotes with plastics tape.

In machinery for dispensing banknotes, it is sometimes desirable to wrap individual stacks of banknotes with banding tape. The banding operation should be completely automatic, and the seal should be strong enough to keep the stack together until the banknotes are to be used, but the band should not be too difficult to remove. Automatic banding apparatus is already known, for example the sheet binding apparatus described in U.K. Patent Application No. 2077655A. Tape is wound around a stack of sheets, and then the overlapping ends of the tape are sealed together by an electric heater; the heater assembly also cuts an end of the tape from the tape supply.

It is an object of the present invention to improve the seal formed between the ends of the wrapping tape, in particular to make it highly resistant to shearing forces and yet easily removable by a user.

The present invention consists in a method of wrapping an object with a length of tape drawn from a continuous tape supply, in which the tape is wrapped around the object with portions of the tape overlapping, the overlapping portions being clamped, severed from the tape supply, and then locally heated along a plurality of substantially parallel strips extending in the direction of the overlapping tape portions and thereby sealed, characterised in that after clamping of first overlapping portions of the tape sealing is effected by applying heat to second overlapping portions of the tape between the clamped first portions and the severed end along the said plurality of substantially parallel strips so as to bond the overlapping portions together substantially only at those strips and to leave an unbonded tab extending between the bonded portion of the overlying tape and the severed end, whereby the heat seal so formed resists shearing forces but is easily undone by peeling back the tape tab parallel to the said strips.

US—A—3788933 discloses a method having all of the features set out in the first part of the method claim (1) according to the invention and comprising wrapping around a package and around a table on which the package is placed, and locally heating overlapping tape portions along parallel strips which extend in the direction of the tapes by means of heating blades introduced into a groove in the table, i.e. between the overlapping tape portions and the package.

WO 81/03315 shows a strapping station which has all of the features set out in the first part of the apparatus claim (2) according to the invention where a band is guided into grooves in plates surrounding the object to be packed, after which two heated jaws move to press overlapping portions of the band material into oval depressions in an underlying guide to seal the band; a knife cuts the loop from the band supply.

Apparatus according to the invention for wrapping an object with a length of tape extending from a continuous tape supply to provide overlapping portions and having a clamp for holding the objects, means for wrapping the tape around the object, means for clamping the overlapping portions, and a heater and a platen between which lie overlapping tape portions, the heater being formed for locally heating the overlapping tapes along a plurality of substantially parallel strips extending in the direction of the tape and thereby sealing the overlapping portions for a length of the tape which terminates short of the position of the cutting blade to leave an unbonded tape tab, and means in the form of a cutting blade for severing the tape wrapping from the tape supply, the platen being located between the object and the overlapping tape portions and the apparatus being characterised in that it comprises an assembly mounted to travel toward and away from the overlying portions of the tape on the side opposite the platen, the clamp being resiliently mounted on the assembly for clamping a first section of the overlapping tape portions as the assembly continues to travel toward the overlapping portions and the cutting blade being mounted on the assembly in position to engage and sever the portion of the tape extending to the tape supply subsequent to the clamping of the first section of the overlapping portions; and the heater being mounted on the assembly between the clamp and the cutting blade in position to heat a second section of the overlapping portions subsequent to the severing of the tape and to press the heated section against the platen to bond the overlapping portions, whereby there is formed a parallel-strip heat seal between the overlapping tape portions at the said second section which resists shearing forces but is easily undone by peeling back the tape tab parallel to the strips. The heater may be powered continuously but is preferably switched on only when the heater assembly engages the tape for the sealing operation.

In order that the invention may be better understood, a preferred embodiment will now be described with reference to the accompanying drawings, wherein:—

Figure 1 is a view of a tape band wound around a stack of banknotes, the band being sealed along a series of parallel strips in accordance with a preferred form of the invention;

Figure 2A is a side elevation of a retractable heater assembly in accordance with a preferred embodiment of the invention;

Figure 2B is an end view of the heater assembly of Figure 2A;

Figure 2C is a plan view of the same heater assembly; and

Figure 3 is a sketch of an electric resistance heater element which can be employed in the heater assembly as an alternative to the wire element shown in Figures 2B and 2C.

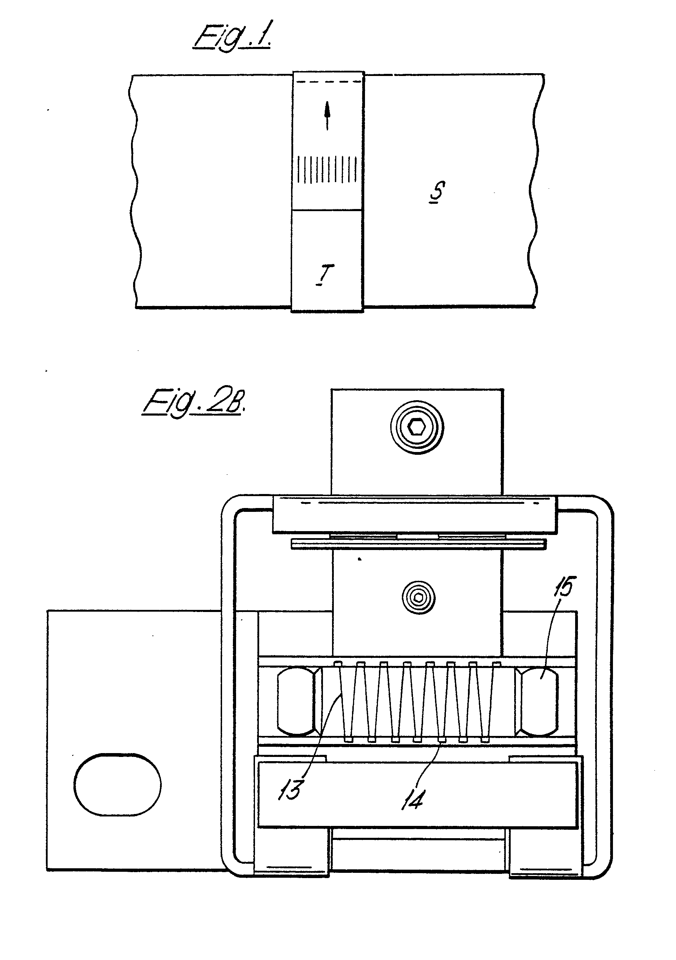

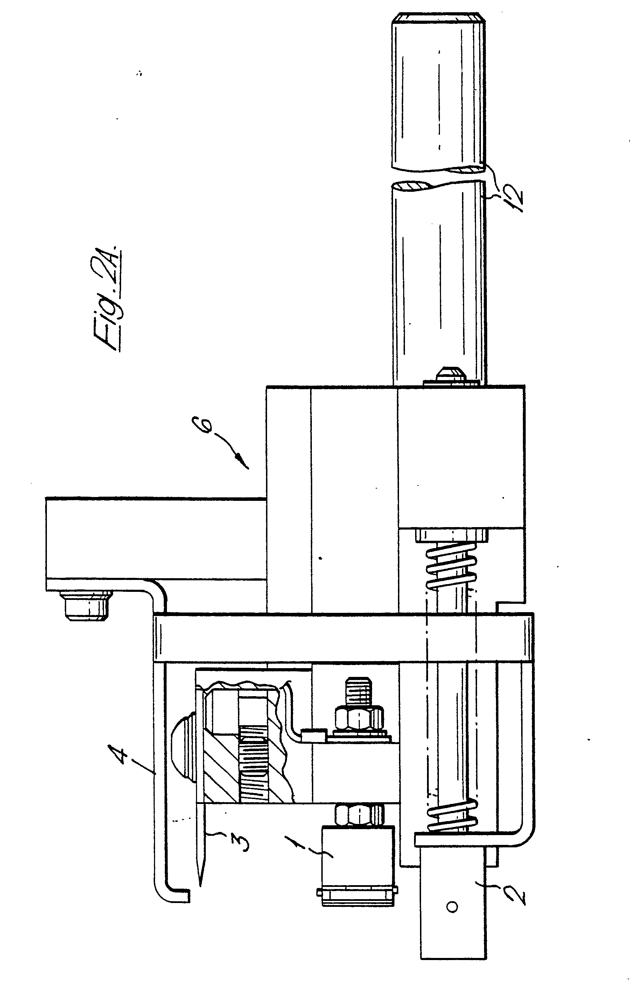

The principle of the invention, illustrated in Figure 1, is that by sealing the overlapping ends of the tape band T only along a series of parallel, or nearly parallel, strips, of which 10 are shown in Figure 1, the tape band is resistant to the shearing forces resulting from the normal handling of the stack S of banknotes, and yet can easily be removed by lifting the tag formed by the end of the tape. The parallel strip seals are easily undone when the tag is lifted and peeled back in the direction of the arrow in Figure 1, i.e. along the length of the tape band.

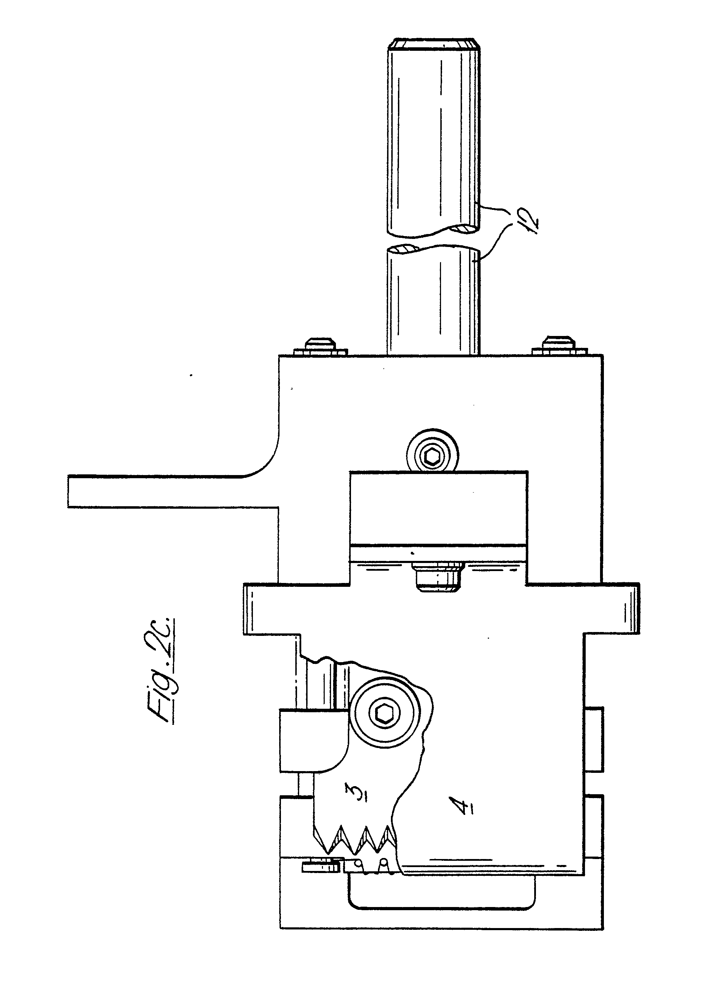

The seal may be formed as follows. The stack S of banknotes is wrapped with tape from a tape supply spool, and overlapping portions of the tape are held over a platen facing the stack. Referring now to Figure 2A, a retractable heater assembly 6 is advanced by a rod 12 in a direction parallel to the rod 12 towards the overlapping portions of the tape on the platen. The heater assembly is advanced leftwards until a sprung clamp 2 clamps overlapping portions of the tape onto the lower part of the platen (not shown). It is assumed for the purpose of this description that banding tape is fed from a supply spool located above the heater assembly 6 of Figure 2A. While the sprung clamp 2 holds the tape onto the platen, a blade 3 is advanced still further, against the force of the spring 11, and cuts off the desired length of tape for banding. The blade 3 is shown in greatest detail in Figure 2C which is a plan view of the heater assembly shown in side elevation in Figure 2A. The blade 3 is so positioned as to leave a tag on the cut end of the tape, the tag (shown in Figure 1) facilitating the subsequent removal of the band from the stack when the banknotes are to be used, as described above.

A heater 1 and the blade 3 are mounted together on an assembly which can be advanced further leftwards against the force of the spring 11, while the sprung clamp 2 remains in position against the platen. For the safety of an operator, a guard 4 protects the blade 3; the guard 4 moves with the sprung clamp 2.

The blade 3 and heater 1 are thus advanced from the retracted position of Figure 2A to an operative position at which the blade 3 is free of the guard 4, when it cuts the tape. Shortly after the tape has been cut, the heater 1 engages the overlapping ends of the tape and pushes them against the platen. At this point, a heater element 13, Figure 2B, is energised with a pulse of electric current supplied through terminals 15, and the face of the heater block 1 engaging the tape ends reaches a high temperature only at a plurality of substantially parallel strips corresponding to the areas to be sealed. The heat from the heater block 1 seals the band in the platen area, and after the band has cooled the heater assembly 6 is retracted.

The heater 1 will now be described in greater detail. The heater element 13 of Figure 2B consists of a length of exposed wire, wound in a zig-zag fashion around formers on the block. The element is wound around the heater block using a jig. The element is then clamped to the heater block using a removable clamp. The jig is removed and the heater loops, at the ends of each parallel element, are bent at right angles to the front face of the heater and are bonded to the heater block. When the adhesive is cured, the clamp is removed leaving a series of parallel elements, proud of the heater face.

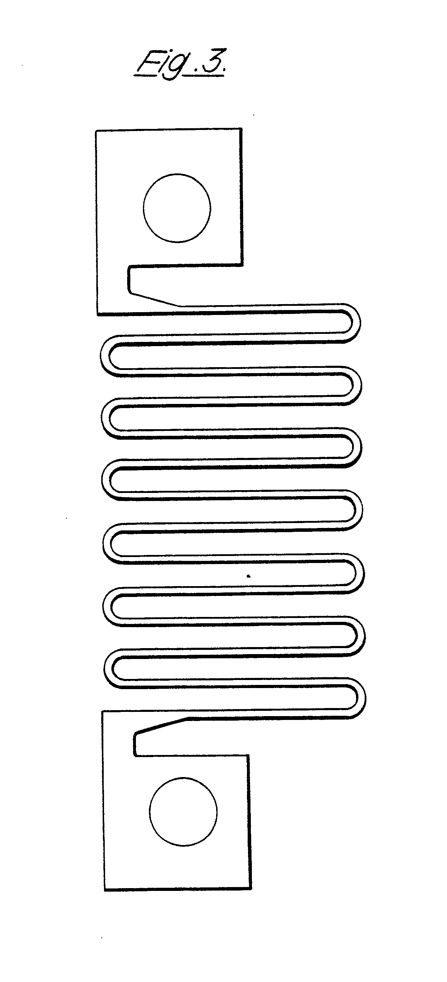

A similar system uses an etched heater element, as shown in Figure 3, which is bonded to the block in a similar fashion.

For either of the above forms of heater the element can be chosen from any of a variety of materials, depending on the life required and the type of driving circuit used. In a constant energy system, the heater is supplied with a selected voltage for a certain period of time and the supply is then switched off. In a temperature sensing system, an electrical bridge circuit regulates the electricity supply to the element in accordance with the temperature. The resistance of the heater changes with temperature and this is used to regulate the temperature; for this system, an element with a high temperature coefficient of resistance is used.

In the example of Figure 3, the element consists of a zig-zag pattern with exactly parallel strips, there being twelve pitches of 1.6 mm. The internal radius of each of the 180° bends of the zig-zag pattern is 0.65 mm. The overall length of the element is around 40 mm.

**Claims**

1. A method of wrapping an object with a length of tape drawn from a continuous tape supply, in which the tape (T) is wrapped around the object (S) with portions of the tape overlapping, the overlapping portions being clamped (2), severed from the tape supply (3), and then locally heated (13) along a plurality of substantially parallel strips extending in the direction of the overlapping tape portions and thereby sealed, characterised in that after clamping of first overlapping portions of the tape (T) sealing is effected by applying heat to second overlapping portions of the tape between the clamped first portions and the severed end along the said plurality of substantially parallel strips so as to bond the overlapping portions together substantially only at those strips and to leave an unbonded tab extending between the bonded portion of the overlying tape and the severed end, whereby the heat seal so formed resists shearing forces but is easily undone by peeling back the tape tab parallel to the said strips.

2. Apparatus for wrapping an object (S) with a length of tape (T) extending from a continuous tape supply to provide overlapping portions and having a clamp (2) for holding the objects (S), means for wrapping the tape (T) around the object (S), means for clamping the overlapping portions, and a heater (13) and a platen between which lie overlapping tape portions, the heater (13) being formed for locally heating the overlapping tapes along a plurality of substantially parallel strips extending in the direction of the tape and thereby sealing the overlapping portions for a length of the tape which terminates short of the position of the cutting blade to leave an unbonded tape tab, and means in the form of a cutting blade (3) for severing the tape wrapping from the tape supply, the platen being located between the object and the overlapping tape portions and the apparatus being characterised in that it comprises an assembly (6) mounted to travel toward and away from the overlying portions of the tape on the side opposite the platen, the clamp (2) being resiliently mounted on the assembly for clamping a first section of the overlapping tape portions as the assembly continues to travel toward the overlapping portions and the cutting blade (3) being mounted on the assembly in position to engage and sever the portion of the tape extending to the tape supply subsequent to the clamping of the first section of the overlapping portions; and the heater (13) being mounted on the assembly (6) between the clamp and the cutting blade in position to heat a second section of the overlapping portions subsequent to the severing of the tape and to press the heated section against the platen to bond the overlapping portions, whereby there is formed a parallel-strip heat seal between the overlapping tape portions at the said second section which resists shearing forces but is easily undone by peeling back the tape tab parallel to the strips.

3. Apparatus in accordance with claim 2, wherein the heater includes an electric resistance heater element (13) of such a configuration that only strips of the surface of the heater to be applied to the tape become sufficiently hot to seal the tape.

4. Apparatus in accordance with claim 3, wherein the electric resistance heater element (13) is wound in a "zig-zag" configuration, in which the bends are constituted by semicircular portions of the element.

5. Apparatus in accordance with claim 2, 3 or 4, wherein the heater assembly (13) is powered only when it engages the tape for the sealing operation.

**Patentansprüche**

1. Verfahren zum Banderolieren eines Gegenstands mit einem Band, das von einem kontinuierlichen Bandvorrat abgezogen wird, bei dem das Band (T) um den Gegenstand (S) so herumgewickelt wird, daß sich Abschnitte des Bandes überlappen, wobei die sich überlappenden Abschnitte eingeklemmt (2), vom Bandvorrat (3) abgetrennt und dann örtlich längs mehrerer weitgehend paralleler Streifen, die sich in Richtung der sich überlappenden Bandabschnitte erstrecken, erwärmt (13) und dadurch verbunden werden, dadurch gekennzeichnet, daß nach dem Einklemmen erster sich überlappender Abschnitte des Bandes (T) das Verbinden durch Erwärmen zweiter sich überlappender Abschnitte des Bandes zwischen den eingeklemmten ersten Abschnitten und dem Trennende längs der erwähnten im wesentlichen parallelen Streifen bewirkt wird, so daß die sich überlappenden Teile im wesentlichen nur an diesen Streifen aneinander haften und eine nicht haftende Lasche verbleibt, die sich zwischen dem haftenden Abschnitt des oben liegenden Bandes und dem Trennende erstreckt, und die durch Erwärmung gebildete Verbindung Scherkräften standhält, jedoch leicht durch Zurückziehen der Bandlasche parallel zu den erwähnten Streifen gelöst werden kann.

2. Vorrichtung zum Banderolieren eines Gegenstands (S) mit einem Band (T), das sich von einem kontinuierlichen Bandvorrat weg erstreckt, so daß sich überlappende Abschnitte gebildet werden, und die eine Klemme (2) zum Festhalten der Gegenstände (S), Mittel zum Herumwickeln des Bandes (T) um den Gegenstand (S), Mittel zum Einklemmen der sich überlappenden Abschnitte, eine Heizeinrichtung (13) und eine Platte, zwischen denen sich überlappende Bandabschnitte liegen, wobei die Heizeinrichtung (13) so ausgebildet ist, daß sie die sich überlappenden Bänder längs mehrerer weitgehend paralleler, sich in Richtung des Bandes erstreckender Streifen erwärmt, und dadurch die sich überlappenden Abschnitte über eine vorbestimmte Länge des Bandes verbindet, die kurz vor der Lage der Schneidklinge endet, so daß eine nicht haftende Bandlasche verbleibt, und Mittel in Form einer Schneidklinge (3) zum Abschneiden des Bandwickels vom Bandvorrat aufweist, wobei die Platte zwischen dem Gegenstand und den sich überlappenden Bandabschnitten angeordnet ist, dadurch gekennzeichnet, daß die Vorrichtung eine Anordnung (6) aufweist, die so gelagert ist, daß sie auf der der Platte gegenüberliegenden Seite in Richtung auf die sich überlappenden Abschnitte des Bandes und von diesen weg bewegbar ist; daß die Klemme (2) elastisch auf der Anordnung gelagert ist, um einen ersten Teil der sich überlappenden Bandabschnitte einzuklemmen, während die Anordnung ihre Bewegung in Richtung auf die sich überlappenden Abschnitte fortsetzt; daß die Schneidklinge (3) auf der Anordnung in einer solchen Lage angeordnet ist, daß sie den sich in Richtung auf den Bandvorrat erstreckenden Bandabschnitt nach dem Einklemmen des ersten Teils der sich überlappenden Bandabschnitte berührt und abschneidet; und daß die Heizeinrichtung (13) auf der Anordnung (6) zwischen der Klemme und der Schneidklinge in einer solchen Lage angeordnet ist, daß sie einen zweiten Teil der sich überlappenden Abschnitte nach dem Durchtrennen des Bandes erwärmt und den erwärmten Teil an der Platte andrückt, damit die sich überlappenden Abschnitte aneinander haften, so daß eine durch Erwärmung gebildete Verbindung in Form paralleler Streifen zwischen den sich überlappenden Bandabschnitten in dem erwähnten zweiten Teil gebildet wird, die Scherkräften standhält, jedoch leicht durch Zurückziehen der Bandlasche parallel zu den Streifen gelöst werden kann.

3. Vorrichtung nach Anspruch 2, bei der die Heizeinrichtung ein elektrisches Widerstandsheizelement (13) mit einer solchen Form aufweist, daß nur Streifen der Oberfläche der Heizeinrichtung, die am Band angelegt wird, hinreichend heiß werden, um das Band zu verbinden.

4. Vorrichtung nach Anspruch 3, bei der das elektrische Widerstandsheizelement (13) zickzackförmig gewickelt ist, so daß die Biegungen durch halbkreisförmige Teile des Elements gebildet werden.

5. Vorrichtung nach Anspruch 2, 3 oder 4, bei der die Heizanordnung (13) lediglich dann mit Strom versorgt wird, wenn sie zur Herstellung der Verbindung am Band anliegt.

**Revendications**

1. Procédé pour entourer un objet avec une longueur de ruban extrait d'une source d'alimentation continue en ruban, dans lequel on enroule le ruban (T) autour de l'objet (S), des parties du ruban se superposant, les parties superposées étant bloquées (2), sectionnées de la source (3) d'alimentation en ruban, puis chauffées localement (13) le long d'une pluralité de bandes sensiblement parallèles s'étendant dans la direction des parties superposées du ruban et scellées de cette façon, caractérisé en ce qu'après le blocage de premières parties superposées du ruban (T) on effectue un scellement en appliquant de la chaleur à des secondes parties superposées du ruban entre les premières parties bloquées et l'extrémité sectionnée le long de ladite pluralité de bandes sensiblement parallèles de manière à faire adhérer l'une à l'autre les parties superposées essentiellement à l'endroit desdites bandes uniquement et à laisser une languette qui n'a pas adhéré et qui s'étend entre la partie ayant adhéré du ruban se superposant et l'extrémité sectionnée, grâce à quoi le scellement à chaud ainsi formé résiste aux forces de cisaillement mais est facilement détruit si on tire vers l'arrière la languette de ruban parallèlement auxdites bandes.

2. Appareil destiné à entourer un objet (S) avec une longueur de ruban (T) s'étendant à partir d'une source d'alimentation continue en ruban pour former les parties superposées et comportant un élément de blocage (2) pour maintenir en place les objets (S), un moyen pour entourer le ruban (T) autour de l'objet (S), un moyen pour bloquer les parties superposées, et un dispositif de chauffage (13) ainsi qu'un plateau entre lesquels sont placées les parties superposées du ruban, le dispositif de chauffage (13) étant réalisé de manière à chauffer localement les parties superposées du ruban le long d'une pluralité de bandes sensiblement parallèles s'étendant dans la direction du ruban et à sceller ainsi les parties superposées sur une longueur du ruban qui se termine à proximité immédiate de la position de la lame de sectionnement pour laisser une languette de ruban non scellée, et un moyen sous la forme d'une lame de sectionnement (3) pour sectionner de la source d'alimentation en ruban l'enroulement de ruban, le plateau étant placé entre l'objet et les parties superposées du ruban et l'appareil étant caractérisé en ce qu'il comprend un ensemble (6) monté de manière à se rapprocher et à s'éloigner des parties superposées du ruban sur le côté en face du plateau, le moyen de blocage (2) étant monté de façon élastique sur l'ensemble pour bloquer une première section des parties superposées du ruban à mesure que l'ensemble continue à se déplacer vers les parties superposées et la lame de sectionnement (3) étant montée sur l'ensemble à une position lui permettant d'attaquer et de sectionner la partie du ruban s'étendant jusqu'à la source d'alimentation en ruban après le blocage de la première section des parties superposées; et le dispositif de chauffage (13) étant monté sur l'ensemble (6) entre le moyen de blocage et la lame de sectionnement dans une position qui lui permit de chauffer une seconde section des parties superposées à la suite du sectionnement du ruban et à presser la section chauffée contre le plateau pour faire adhérer l'une à l'autre les parties superposées, grâce à quoi est formé, entre les parties superposées du ruban à l'endroit de ladite seconde section, un scellement à chaud en bandes parallèles qui résiste aux forces de cisaillement mais est facilement détruit si on tire vers l'arrière la languette parallèlement aux bandes.

3. Appareil selon la revendication 2, dans lequel le dispositif de chauffage comprend un élément de chauffage (13) à résistance électrique ayant une configuration telle que seules des bandes de la surface du dispositif de chauffage devant être appliquées au ruban deviennent suffisamment chaudes pour sceller le ruban.

4. Appareil selon la revendication 3, dans lequel l'élément de chauffage (13) à résistance électrique est enroulé suivant une configuration en "zigzag", dans laquelle les coudes sont constitués par des parties semi-circulaires de l'élément.

5. Appareil selon la revendication 2, 3 ou 4, dans lequel le dispositif de chauffage (13) est alimenté uniquement quand il porte contre le ruban pour l'opération de scellement.

*Fig.1.*

*Fig.2B.*

Fig.2A.

0 095 915

Fig.2c.

0 095 915

0 095 915

## Fig.3.

4